# EUROPEAN PATENT APPLICATION

(11) **EP 1 369 799 A2**
(43) Date of publication of application: **10.12.2003**
(21) Application number: 03076778.4
(22) Date of filing: 06.06.2003
(51) Int. Cl.: G06F 17/60

(54) **Real estate consultation system**

(30) Priority: 06.06.2002 US 245808
(71) Applicant: Nuevos Desarrolllos Inmobiliarios, S.L., 08007 Barcelona (ES)
(72) Inventor: Herrero, José Maria, 08007 Barcelona (ES)
(74) Representative: Gallego Jiménez, José Fernando

(57) **Abstract**

A system and method receives a user profile and searches a data structure for suitable real estate zones that satisfy preferences within the user profile. Based on the user preferences, the geographic areas that best satisfy the user's preferences are reported to the user, along with ancillary information, such as socio-economic reports, market research data, and so on. Sets of different user preferences are customized for determining the best geographic areas for residential, commercial, and industrial use, and include such options as traffic patterns, neighbouring businesses, population density, and so on. The user is also provided the option of indicating the relative importance, or weighting factor, associated with each user's preference.

## Description

### BACKGROUND OF THE INVENTION

### 1. Field of the Invention

This invention relates to the field of on-line information access, and in particular to a method and system that identifies real estate zones that correspond to a set of user preferences.

### 2. Description of Related Art

A number of search engines and search techniques are available for locating real estate property that is for sale or lease. A user identifies a set of criteria, such as the name of the city, a price range, a style, a size, and so on. The search engine searches a database, and provides a list of properties that are for sale or lease that satisfy the criteria. For the purposes of this disclosure, the term "lease" is intended to encompass all forms of possession of the property of another, with the permission of the other, usually in return for a fee. Some search engines are specific to particular types of property, such as commercial, residential, industrial, and so on, and include criteria that are designed to facilitate searches within the particular property types.

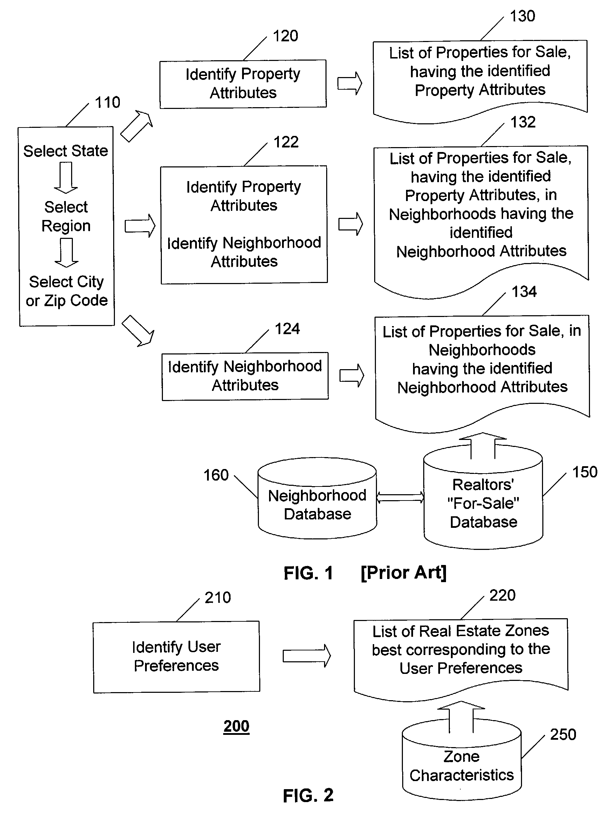

FIG. 1 illustrates an example flow diagram of prior art real estate search engines. Typically, a user identifies a locale of interest, at 110. The user typically identifies a city or zip code of interest, or may specify a bounding radius about a given point. Next, the user generally provides attributes required of the property, at 120. For example, for residential property, the user will generally specify a minimum number of bedrooms and baths, a price range, and so on. Given a locale of interest and a select set of property attributes, the search engine identifies properties in the locale with these attributes that are for sale or lease, at 130, based on information contained in one or more databases 150 that are maintained by realtors in the area, such as the typical "MLS" (Multiple Listing Service) database. If there are no properties for sale or lease that satisfy the specified criteria, the search engine reports this fact, and the user is provided the option of modifying the required property attributes to locate other properties that are for sale or lease.

Optionally, some real estate search engines allow the user to specify attributes of a neighbourhood that are required, at 122. For example, the user may desire a neighbourhood that is zoned for a particular minimum acreage, or a neighbourhood having a local school with specific characteristics, or a neighbourhood that does not include any commercial or industrial properties, and so on. In such a system, the search engine provides a list of properties that are for sale or lease having the required property attributes within neighbourhoods having the desired neighbourhood attributes, at 132, based on a database of neighbourhood characteristics 160. As illustrated in FIG. 1, a user may choose not to specify particular property attributes, at 124, so that all of the properties that are for sale or lease in the neighbourhoods having the specified neighbourhood attributes are listed, at 134.

Similar search techniques are used for identifying commercial or industrial properties that are for sale or lease within the given locale. Typically, the parameters of interest include square footage, access to major thoroughfares and/or public transportation, tax rate, and so on. Generally, the database 150 includes a field that identifies each property by a particular type, such as residential-single-family, residential-multi-family, commercial-office, commercial-retail, light-industrial, and heavy-industrial. By specifying a particular type of property, the user is provided with lists of only properties of the particular type that are for sale or lease.

When a user selects a property from the provided list, 130, 132, 134, additional information is generally provided, such as photographs of the subject property, a floor plan of the structure, a plot plan of the property, and so on. Additionally, links are typically provided to facilitate access to ancillary information, such as information regarding the community, political structure, socio-economic reports, and so on.

The common goal of conventional real estate search engines is to identify property that is for sale or lease within a given locale. This goal presumes that the user is able to identify the locale of interest, and further presumes that the user is only interested in properties that are currently for sale or lease. Although the use of a real estate search engine may facilitate the identification of properties that are currently for sale or lease in a given locale, such search engines often provide a wholly unsatisfactory experience to a user who is searching for a suitable locale in an unknown area. An employee who is being transferred to a new office, for example, must typically contact a realtor in the area to determine which neighbourhoods or towns within commuting distance of the new office might provide a suitable environment, based on the employee's family needs and other factors. In like manner, an entrepreneur cannot merely rely upon a listing of commercial properties that are for sale or lease for finding a suitable locale for establishing a business presence.

### BRIEF SUMMARY OF THE INVENTION

It is an object of this invention to provide an automated consultation service for identifying locales, or real estate zones, that satisfy a set of user preferences. It is a further object of this invention to identify such locales, independent of whether a property is for sale or lease at the locales. It is a further object of this invention to provide this service via the Internet.

These objects, and others, are achieved by providing a system and method that receives a user profile and searches a database for suitable real estate zones that satisfy preferences within the user profile. Based on the user preferences, the geographic areas that best satisfy the user's preferences are reported to the user, along with ancillary information, such as socio-economic reports, market research data, and so on. Sets of different user preference options are customized for determining the best geographic areas for residential, commercial, and industrial use, and include such options as traffic patterns, neighbouring businesses, population density, and so on. The user is also provided the option of indicating the relative importance, or weighting factor, associated with each preference option.

### BRIEF DESCRIPTION OF THE DRAWINGS

The invention is explained in further detail, and by way of example, with reference to the accompanying drawings wherein:
FIG. 1 illustrates an example flow diagram of prior art real estate search engines;
FIG. 2 illustrates an example flow diagram of a real estate consultation system in accordance with this invention;
FIG. 3 illustrates an example flow diagram for creating a database of real estate zone characteristics in accordance with this invention;
FIG. 4 illustrates an example flow diagram for searching a database of real estate zone characteristics in accordance with this invention; and
FIG. 5 illustrates an example block diagram of a real estate consultation system in accordance with this invention.

Throughout the drawings, the same reference numerals indicate similar or corresponding features or functions.

### DETAILED DESCRIPTION OF THE INVENTION

This invention is premised on the observation that a user is often interested in finding a preferred locale for relocating, independent of the properties that are currently for sale or lease. Using a conventional real estate search system, a user runs the risk of not learning about a particular neighbourhood or commercial section merely because property is not currently for sale or lease in that neighbourhood or section. As noted above, because the purpose of a real estate search engine is to facilitate the sale or lease of available properties, this is an obvious outcome, because the providers of the real estate search engine have little interest in providing information that is unrelated to currently available property.

As also noted above, because of the limitations of conventional real estate search engines, if a user is considering relocating to an area, the user will generally seek the advice of a professional realtor. A problem with this approach, however, is that a realtor has a vested interest in the region within which the realtor is licensed. A realtor in one city may be particularly useful for identifying sections of the city that may satisfy the user's requirements, but would be highly unlikely to recommend a different city, or to be cognizant of particular sections of other cities that may provide a better locale for the user's particular needs. Although some multi-regional real estate firms offer relocation services that span multiple cities, the service relies upon the use of agents who each have a limited scope of information.

Consider a user who is approaching retirement age, and is interested in relocating to an "ideal" community, where "ideal" is defined by a particular set of criteria and preferences. If the retirement is a year or more away, a listing of currently available properties is not of interest, except for providing general information, such as the average cost of property having certain attributes. And, as noted above, the user will only be provided information concerning areas that currently have properties for sale or lease. If this user contacts a realtor, the user will generally be advised of retirement communities that the particular realtor happens to know about. In most cases, a user who is searching for a locale, rather than a particular property, is left to his or her own resources to investigate and research particular areas. Although a consultant could be hired to perform the necessary research, few users have the luxury of being able to afford to hire someone to search for an ideal community.

A commercial user who is interested in relocating to an "ideal" site, where "ideal" is typically defined in terms of increased potential profits, faces a similar dilemma. When a retailer seeking a new location, for example, obtains a list of available retail property in a particular area, the retailer must be concerned with the reasons that current retailer is selling the property. If the retailer is seeking property upon which to build, the retailer must first identify the property, and then conduct an appropriate study of the market advantages and disadvantages of the particular site. Generally, relocation to a distant locale is a high-risk venture, because of the lack of personal knowledge of the distant locale, or because of the high costs associated with obtaining the level of information required to reduce the risks. If relocation to a distant locale is under consideration, most commercial users will employ a consultant to perform the research and provide advice. If the commercial user cannot afford the time or cost to perform the required research, the commercial user will generally remain within the local area, potentially missing the increased profits that relocation to a distant locale might provide.

FIG. 2 illustrates an example flow diagram of a real estate consultation system 200 in accordance with this invention. In this example system, the user's preferences are identified, at 210, and a list of locales, or "zones" are identified that satisfy the user's preferences, at 220. For ease of reference, the term "real estate zone" is used herein to include a set of properties having similar characteristics. In the residential market, a "zone" may be equivalent to a particular neighbourhood, or a particular street or "block", or other area partitioning. In the commercial market, a "zone" may be a particular section of a city, or a particular mall, or an area along a particular route, and so on. A database 250 that contains the characteristics of each zone is illustrated in FIG. 2.

Of particular note, the characteristics of each zone are substantially independent of properties that are currently for sale or lease within each zone. That is, the characteristics of a neighbourhood are generally consistent, independent of particular property transfers. Some neighbourhood characteristics, such as 'stability', or 'trends', may be affected by property transfers in the long-term, but will not generally be affected by the offer of sale or lease of any particular property. In like manner, the commercial success of a particular mall is generally slow to change, and, in accordance with the principles of this invention, the selection of a particular mall for future relocation of a retail establishment need not be dependent upon whether a property within the mall is currently available for sale or lease.

In a preferred embodiment of this invention, the database of zone characteristics is maintained by a service organization that does not have a vested interest in effecting a property transfer. This service organization may be sponsored by realtors, but the characterization of zones should not be biased by realtor interests. As will be evident to one of ordinary skill in the art, in view of this disclosure, the correspondence between the parameters available for capturing the user's preferences 210 and the parameters contained in the database of zone characteristics 250 will have a significant impact on the effectiveness and efficiency of the system 200 of FIG. 2.

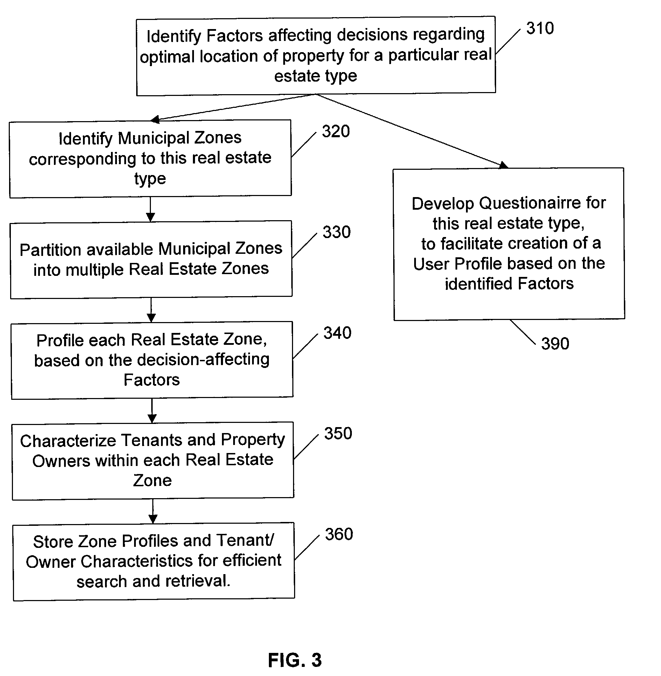

FIG. 3 illustrates an example flow diagram for creating a database of zone characteristics in accordance with this invention. For efficiency, this flow diagram is applied for each different real estate type. Preferably, at least four real estate types are supported: residential, retail, office, and industrial, although fewer or more types may be supported.

Of particular significance, the process includes a step 310 wherein the factors that affect decisions regarding the location of property of interest within the given real estate type are identified. These factors are preferably determined via market research within the given real estate type, a sampling of which follows. One of ordinary skill in the art will recognize that this sampling is indicative of the common factors in each real estate type, and additional or fewer factors may be determined to be applicable.

In In the residential market, the availability of leisure and sports services, the availability and quality of municipal services, climatology, ethnic diversity, average home size, average homestead acreage, and other factors, have been found to be influential in a person's choice of residence.

In the retail market, the factors include: desired and non-desired neighbours/competitors; commerce type and quantity; pedestrian, tourist, and wheeled traffic patterns; population density; residents' socio-economic levels; and other factors.

In the office market, the factors include: type and density of office buildings; local firms; access to public and private transportation; available services and commercial activity; residents' socio-economic levels; and other factors.

In the industrial market, the factors include: economic growth and expectations; fiscal incentives; industrial concentration; available infrastructures; public and private services; and other factors.

These identified factors are preferably used to create the database of zone characteristics, at 320-360, as well as for creating a questionnaire for determining each user's preferences, at 390. For ease of reference, the term "profile" is used to refer to a set of characteristics or preferences; a zone profile corresponding to the set of zone characteristics, and a user profile corresponding to a set of user preferences. By using the same factors to create the database of zone profiles and to create the questionnaire that is used to create the user profiles, the subsequent matching of a user profile to one or more zone profiles can be performed efficiently and effectively.

The flow steps 320-360 for creating zone profiles are presented for illustrative purposes, and correspond to a process for creating zones within a geographic region, such as a city or county. At 320, the bounds of municipal zoning are used to create a first level of partitioning of the region. For example, if the real estate type is residential, regions that are municipally zoned for commercial or industrial use would be excluded. If the municipality has differing residential zones, such as R-1 (1 acre zoning) and R-2 (2 acre zoning), these zones are distinguished as separate municipal zones for subsequent processing.

At 330, the municipal zones are partitioned into real estate zones for the purposes of this invention. In a straightforward embodiment, this partitioning is by streets, or clusters of streets, malls, commerce parks, industrial parks, and so on. At 340, each of these real estate zones is characterized based on the decision-affecting factors identified at 310. If one or more of the factors address specific characteristics of neighbours within the zone, the tenants and/or property owners within the zone are characterized, at 350.

At 360, the determined zone profiles are organized for storage in a database. Optionally, this organization includes a consolidation of contiguous zones having similar profiles. That is, for example, if the original partitioning at 330 is by individual streets, groups of contiguous streets having similar profiles form a single real estate zone, in preference to storing each street as a different zone.

At 390, the identified factors are used to create a questionnaire that facilitates the creation of a user profile. The user's preference regarding each factor is solicited, as well as the relative significance of each factor, such as a weighting from "not important" to "very important".

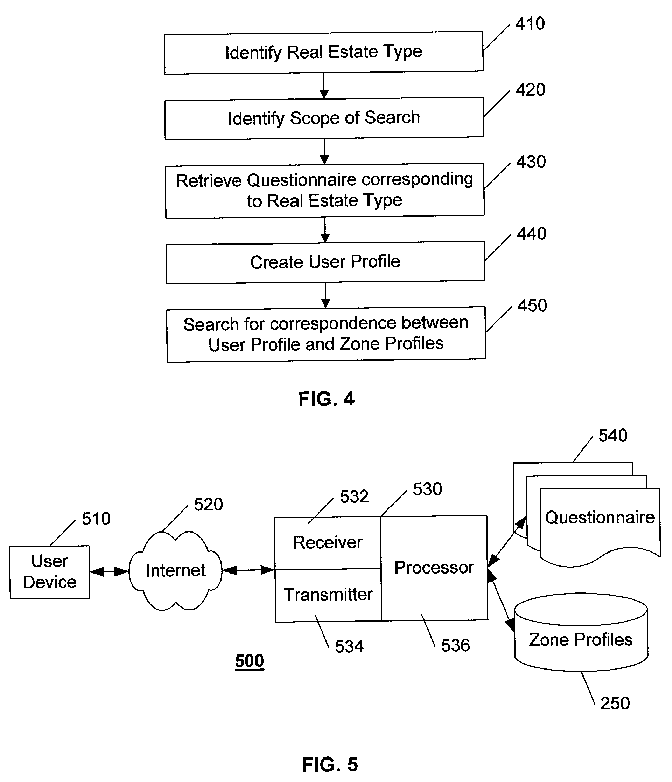

FIG. 4 illustrates an example flow diagram for searching a database of real estate zone characteristics in accordance with this invention. At 410, the real estate type is identified, to identify the zone profiles that will be searched, and to identify the type of questionnaire to present to the user for creating a user profile. At 420, the scope of the user's search is identified. A user may choose, for example, to search all of the available zone profiles, or profiles from a select geographic area. Depending upon the organization of the zone profile database, other scope-limiting parameters may be offered. For example, the zones may be organized based upon whether the zone is developed, whether it is located on a waterway, and so on.

At 430, the questionnaire corresponding to the real estate type is retrieved, and presented to the user. Based on the user's response to the questionnaire, a user profile is created, at 440. Based on the user profile, and the scope of the user's search, zones that have profiles that correspond to the user profile are identified and presented to the user, at 450. The aforementioned weighting of each factor is used to determine the zones that have characteristics that most closely match the preferences that the user has identified as being important, with lesser significance being given to the preferences that the user has identified as being less important.

Of particular note, the matching of a zone's profile to the user's profile is independent of whether any particular piece of property within the zone is currently available for sale or lease. In this manner, the system of this invention allows a user to find an optimal location for relocation, from which a conventional real-estate-sale-or-lease search process can commence.

FIG. 5 illustrates an example block diagram of a real estate consultation system 500 in accordance with this invention. In a preferred embodiment, a zone search engine 530 is coupled to a user device 510 via an Internet connection 520. The zone search engine 530 is coupled to the database 250 that contains the zone profiles, as well as to a collection of questionnaires 540 that facilitate the creation of a user profile for a given property type. The search engine 530 includes a receiver 532 and transmitter 534 for communicating with the user device 510, and a processor 536 for controlling these communications, accessing the database 250, and, as discussed further below, maintaining an accounting of charges for each user of the zone-searching service.

In a preferred embodiment, access to the zone search engine 530, and subsequently to the database 250 is provided as a fee-service. Different fees are provided for each property type, and for the different scopes of search that the user selects. Also, the fee may be based on the number of zones that are provided to the user. Additionally, ancillary information regarding each zone may also be provided, either as a free service, or as a fee-service.

The foregoing merely illustrates the principles of the invention. It will thus be appreciated that those skilled in the art will be able to devise various arrangements which, although not explicitly described or shown herein, embody the principles of the invention and are thus within its spirit and scope. For example, depending upon the characterization of zones and the user preferences, specific properties within an identified zone may also be provided. For example, it is known that the amount of income that a gasoline station receives is highly dependent upon the station's location relative to traffic control signals at an intersection. In like manner, there are preferred locations for retailers within a mall, and preferred locations for particular industries relative to existing resources, such as railway lines. Similarly, the search engine of this invention may be coupled to conventional real-estate search engine, and may optionally provide an identification of properties within a selected zone based on the information provided by the conventional real-estate search engine. These and other system configuration and optimization features will be evident to one of ordinary skill in the art in view of this disclosure, and are included within the scope of the following claims.

## Claims

1. A computer system comprising:
a receiver that is configured to receive a user profile that identifies preferences of a user;
a processor that is configured to search a data structure containing a plurality of real estate zones to obtain at least one real estate zone that satisfies the preferences of the user, each real estate zone comprising a plurality of real estate properties; and
a transmitter that is configured to report the at least one real estate zone to the user.

2. A computer system as claimed in claim 1, wherein the processor is configured to search the data structure, independent of whether any real estate property of the plurality of real estate properties of each real estate zone is available for sale or lease.

3. A computer system as claimed in any of the preceding claims, wherein the preferences include at least one of:
a pedestrian frequency;
a vehicular frequency; and
a tourist frequency.

4. A computer system as claimed in any of the preceding claims, wherein the preferences include one or more characterizations of neighbours.

5. A computer system as claimed in any of the preceding claims, wherein the preferences include weighting factors that relate to a significance of each of the preferences to the user, and the processor is further configured to search the data structure based upon the weighting factors.

6. A computer system as claimed in any of the preceding claims, wherein the processor is further configured to provide ancillary information related to the at least one real estate zone, via the transmitter.

7. A computer system as claimed in any of the preceding claims, wherein the processor is further configured to identify one or more preferred locations within at least one of the real estate zones.

8. A computer system as claimed in any of the preceding claims, wherein the receiver is configured to obtain the user profile via an Internet connection.

9. A computer system as claimed in any of the preceding claims, wherein the transmitter is configured to report the at least one real estate zone to the user via an Internet connection.

10. One or more computer-readable storage media containing a data structure comprising a plurality of real estate zones associated to their zone profiles and a plurality of real estate properties, wherein each real estate zone has associated real states properties.

11. A computer program, which, when executed by a computer system, causes the computer system to:
receive a user profile that identifies preferences of a user;
search a data structure containing a plurality of real estate zones to obtain at least one real estate zone that satisfies the preferences of the user, each real estate zone comprising a plurality of real estate properties; and
report the at least one real estate zone to the user.

12. A computer program as claimed in claim 11, wherein the data structure is searched for the at least one real estate zone that correspond to the preferences of the user, independent of whether any real estate property of the plurality of real estate properties of the at least one real estate zone is available for sale or lease.

13. A computer program as claimed in any of the preceding claims 11 or 12, wherein the preferences include weighting factors that relate to a significance of each of the preferences to the user, and the computer program is further configured to effect the search of the data structure based upon the weighting factors.

14. A computer program as claimed in any of the preceding claims 11 to 13 , wherein the computer program is further configured to cause the computer system to provide ancillary information related to the at least one real estate zone.

15. A computer program as claimed in any of the preceding claims 11 to 14, wherein the computer program is further configured to cause the computer system to identify one or more preferred locations within at least one of the one or more real estate zones.

16. A method for identifying at least one real estate zone associated to at least one zone profile, wherein the real estate zone includes a plurality of real estate properties stored in a data structure containing a plurality of zone profiles of a plurality of real estate zones, the method comprising the steps of:
obtaining a user profile of the real estate zone to identify, wherein the user profile comprises a plurality of preferences;
searching in the data structure of zone profiles of the plurality of real estate zones the real estate zone that satisfies the preferences of the user profile; and
reporting the real estate zone that corresponds to the user profile, to the user.

17. A method as claimed in claim 16, wherein each of the zone profiles stored in the data structure has associated a plurality of real estate properties.

18. A method as claimed in any of the preceding claims 16 or 17, wherein the step of reporting the real estate zone that corresponds to the user profile comprises reporting the real estate properties associated to the zone profile of the real estate zone.

19. A method as claimed in any of the preceding claims 16 to 18, wherein the step of obtaining the user profile comprises indicating the relative importance of each preference options of the user profile.

20. A method as claimed in any of the preceding claims 16 to 19, wherein the step of searching the data structure is independent of whether any real estate property of the plurality of real estate properties of each real estate zone is available for sale or lease.

21. A method as claimed in any of the preceding claims 16 to 20, wherein the obtaining of the at least one zone profile of each of real estate zones comprises the steps of:
identifying factors that affect a user's selection of property within a given property type;
partitioning an area into a plurality of zones;
determining characteristics of each zone of the plurality of zones relative to the factors; and
creating at least one zone profile based on the characteristics of each zone.

22. A method as claimed in any of the preceding claims 16 to 21, further including creating a questionnaire that facilitates the creation of the user profile for comparison with the at least one zone profile.

23. A method as claimed in any of the preceding claims 21 or 22, wherein partitioning the area includes consideration of municipal zonings within the area.

24. A method as claimed in any of the preceding claims 21 to 23, wherein determining characteristics of each zone includes a characterization of one or more tenants or owners of properties within each zone.

25. A method claimed in any of the preceding claims 16 to 24, further including storing the one or more zone profiles in the data structure that is configured to facilitate a search based on the user profile.

26. A method as claimed in any of the preceding claims 16 to 25, wherein the step of reporting the real estate zone comprises providing ancillary information related to the real estate zone.

27. A method as claimed in any of the preceding claims 16 to 26, wherein the step of obtaining the user profile is effected via an Internet connection.

28. A method as claimed in any of the preceding claims 16 to 27, wherein reporting the at least one real estate zone to the user is effected via an Internet connection.

29. One or more computer-readable storage media containing the computer program that performs steps as recited in claim 16.
